Europäisches Patentamt

European Patent Office

Office européen des brevets

(11) Publication number: **0 134 491**
**A1**

(12) **EUROPEAN PATENT APPLICATION**

(21) Application number: **84108154.0**

(22) Date of filing: **12.07.84**

(51) Int. Cl.⁴: **B 29 C 61/06**
**C 09 J 7/02**

(30) Priority: **15.07.83 JP 127870/83**
**22.07.83 JP 132814/83**

(43) Date of publication of application:
**20.03.85 Bulletin 85/12**

(84) Designated Contracting States:
**DE IT**

(71) Applicant: **Ube Industries, Ltd.**
**12-32, Nishihonmachi 1-chome**
**Ube-shi, Yamaguchi-ken(JP)**

(72) Inventor: **Fujiwara, Youtaro c/o Ube Industries, Ltd.**
**Chiba-Sekiyukagakukojo 8-1,Goiminamikaigan**
**Ichihara-shi Chiba-ken(JP)**

(72) Inventor: **Kataoka, Hideto c/o Ube Industries, Ltd.**
**Chiba-Sekiyukagakukojo 8-1,Goiminamikaigan**
**Ichihara-shi Chiba-ken(JP)**

(74) Representative: **Patentanwälte Phys. Bartels, Dipl.-Ing.**
**Fink Dipl.-Ing. Held**
**Lange Strasse 51**
**D-7000 Stuttgart 1(DE)**

(54) **Heat-shrinkable covering material for special shape pipes and other articles.**

(57) A heat-shrinkable covering material for special shape pipes and other articles is described. The covering material is a laminate of a heat-shrinkable crosslinked plastic layer and a heat-bondable adhesive layer, wherein the adhesive layer on all or a part of one surface of the crosslinked plastic layer is composed mainly of an elastomeric material and has a bonding force expressed by a shear strength of about 0.001 to about 0.05 kg/cm² (as determined according to ASTM D-1002) at a high temperature where the covering material exhibits a largest heat-shrinking force.

*Fig. IA*

EP 0 134 491 A1

## HEAT-SHRINKABLE COVERING MATERIAL FOR
## SPECIAL SHAPE PIPES AND OTHER ARTICLES

BACKGROUND OF THE INVENTION

(1)  Field of the Invention

The present invention relates to a heat-shrinkable covering material having a heat-shrinkable crosslinked plastic layer and a specific adhesive layer, which is suitable for covering peripheral surfaces of various special shape pipes and other articles.

(2)  Description of the Prior Art

A variety of special shape pipes such as elbow pipes, reducers, valves, T-shaped pipes and flanged pipes are used in pipe arrangements for heavy chemical plants, district heating systems and pump stations and neighbouring equipments for pipelines for transportation of crude oil and natural gas.  Conventional heat-shrinkable covering materials having a hot-melt adhesive layer have a poor adhesion at a high temperature.  Therefore, when conventional heat-shrinkable covering materials are applied to these special shape pipes and other articles, various problems are encountered.  For example, when a conventional heat-shrinkable covering material is applied to a special shape pipe and heated, the heat-shrinkable covering material shrinks in the circumferential direction of the pipe and moreover, "shear" is considerably generated in the direction perpendicular to the heat-shrinking direction of the covering material (i.e., to the circumferential direction of the pipe) according to the dimensional change due to the thermal shrinkage. Therefore, it often happens that the covering material deviates or peels from the surface of a part, to be covered, of the special shape pipe, or forms a vacant space in the part to be covered.  Especially, in case of a reducer type pipe where the length of the periphery (or outer diameter) of the pipe is gradually reduced in one direction, if a heat-shrinkable covering material having a high heat shrinkage ratio is wrapped around the reducer type pipe and both the ends were bonded and covered by a heat-seal tape to form a cylinder and heat shrinking is effected, the covering material bonded to the periphery of the reducer by thermal shrinkage in the circumferential direction greatly shrinks also in the direction perpendicular to the heat-shrinking direction at the heat shrinking step. Consequently, the conventional covering material slips into the portion of the pipe having a shorter circumference length and deviates from the part to be covered. In addition, when heat shrinking is effected, the adhesion of the bonded end portion of the conventional covering material becomes poor and hence the covering material is liable to be separated at the bonded portion.

Furthermore, it is considerably difficult to cover the surface of a special portion such as a T-shaped pipe, a blind flange, a valve-surrounding portion or a mirror plate of a tank, which is often observed in a pipeline, a transportation pump station or a chemical industrial plant by a conventional method, and even if covering can be performed according to the conventional method, a covering layer is insufficient as an anti-corrosive or protecting layer and the covering operation is difficult.

Recently, there has been proposed a method in which a plastic sheet (piece) having an adhesive layer in the heated state to a local plane or curved surface of a material to be covered, such as mentioned above. However, when a plastic sheet is heated at a high temperature, uneven shrinkage or expansion or melting or softening is ordinarily caused, resulting in formation of wrinkles or occurrence of thermal breakage. Moreover, in the operation of covering a plastic sheet in the heated state to a part of the surface of a material to be covered, the plastic sheet having wrinkles formed thereon is covered on the material and it is substantially impossible to remove these wrinkles. Therefore, the resulting covering includes many voids on the bonded face of the sheet. Still further, even if a good covering is formed, the end portion of the covered sheet is readily peeled and turned up.

SUMMARY OF THE INVENTION

It is a primary object of the present invention to provide a heat-shrinkable covering material for special shape pipes, which is not accompanied by the above-mentioned problems involved in heat-shrinkable covering materials for special shape pipes. In the case where the heat-shrinkable covering material is arranged around various special shape materials and heat shrinking is effected, since the adhesive layer maintains a high shear strength at temperatures for heat-shrinking the covering material, the covering material bonded closely to the surfaces of the special shape pipes almost does not slip in the direction perpendicular to the heat-shrinking direction at high temperatures for heat shrinking or almost no troubles such as partial peeling are caused.

Another object of the present invention is to provide a heat-shrinkable covering material wherein, since a heat-bondable adhesive layer retaining a shear strength at a high temperature is formed on the heat-shrinkable crosslinked plastic layer, at the covering operation where the crosslinked plastic layer is heated at a high temperature, the properties of the crosslinked plastic layer and the properties of the adhesive layer help each other, and formation of wrinkles or voids on the bonded surface is prevented in the heated state where the covering material is contacted with a part of a material to be covered.

In accordance with the present invention, there is provided a heat-shrinkable covering material for special shape pipes, which comprises a laminate of a heat-shrinkable crosslinked plastic layer and a heat-bondable adhesive layer, wherein the adhesive layer on all or a part of one surface of the crosslinked plastic layer is composed mainly of an elastomeric material and has a bonding force expressed by a shear strength of about 0.001 to about 0.05 $kg/cm^2$ (as determined according to ASTM D-1002) at a high temperature where the covering material exhibits a largest heat-shrinking force.

BRIEF DESCRIPTION OF THE DRAWINGS

Fig. 1A is a side view showing an example of the heat-shrinkable covering material of the present invention and Fig. 1B is a plane view thereof;

Fig. 2 is a perspective view showing an example of the state where the heat-shrinkable covering material is wrapped around a special shape pipe to be covered and both the ends thereof are bonded together to form a cylinder; and,

Fig. 3 is a perspective view showing an example of the state where a special shape pipe similar to that shown in Fig. 2 is covered with the heat-shrinkable covering material of the present invention.

DETAILED DESCRIPTION OF THE PREFERRED EMBODIMENTS

The heat-shrinkable covering material of the present invention will now be described in detail with reference to the accompanying drawings.

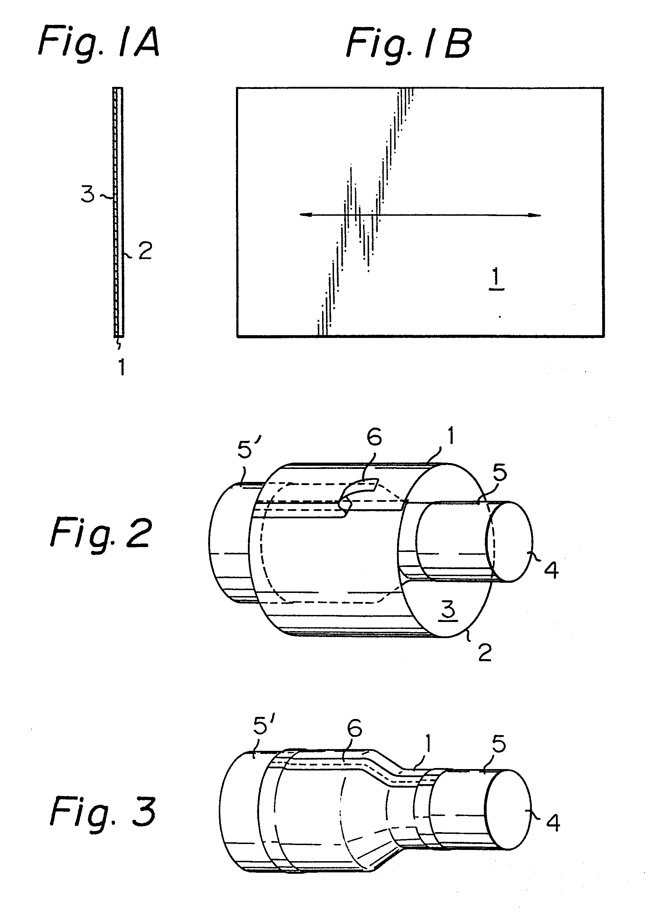

In principle, as shown in Figs. 1A and 1B, the heat-shrinkable covering material 1 of the present invention is composed of a laminate of a heat-shrinkable crosslinked plastic layer 2 and a specific heat-bondable adhesive layer 3.

The heat-shrinkable crosslinked plastic layer may be any of films and sheets of known heat-shrinkable crosslinked plastics and laminates thereof.

The crosslinked plastic film or sheet used in the present invention has a heat-shrinking temperature of about 80 to about 200°C, preferably about 90 to about 180°C, and thermal shrinkage ratio is about 3 to about 80%, preferably about 5 to about 70%.

In the case where the heat-shrinkable covering material is applied onto a special shape pipe, it is preferred that the crosslinked plastic layer has a thermal shrinkage ratio of about 20% to about 80%, more preferably about 30% to about 70%.

In the case where the heat-shrinkable covering material is applied onto a part of the surface of other articles, it is preferred that the crosslinked plastic layer has a thermal shrinkage ratio of about 3% to about 30%, more preferably 5% to 25%, and the crosslinked plastic layer has such a thermal shrinkability that thermal expansion owing to the linear thermal expansion coefficient is substantially cancelled at the time of heating for application. Namely, it is preferred that the thermal shrinkage ratio based on drawing at a high temperature be larger than an ordinary linear expansion ratio of a crosslinked plastic material in the undrawn state, which constitutes the crosslinked plastic layer. It is ordinarily preferred that the thermal shrinkage ratio be 1.5 to 7 times, more preferably 2 to 6 times, the linear expansion ratio.

It is preferred that the crosslinking degree of the crosslinked polymer layer, expressed as the gel fraction described hereinafter, be about 20 to about 90%, more preferably about 25 to about 80%.

The gel fraction is determined by putting a sample (crosslinked plastic film or sheet) into xylene, dissolving the sample in xylene by refluxing at about 130°C for about 10 hours, dividing the weight (A g) of the sample not dissolved in xylene by the weight (B g) of the whole sample and multiplying the obtained value by 100, as expressed by the following formula:

$$\text{Gel fraction (\%)} = (A/B) \times 100$$

A crosslinked plastic layer preferably used in the present invention is, for example, a heat-shrinkable crosslinked plastic film or sheet prepared by forming a thermoplastic resin such as polyethylene, polypropylene, an ethylene-vinyl acetate copolymer, an ethylene-propylene copolymer, polyvinyl chloride, a polyester or a polyamide (nylon-6 or nylon-6,6) into a film or sheet by extrusion molding or the like, crosslinking the film or sheet by irradiation with radioactive rays such as electron beams, X-rays or $\gamma$-rays or chemical reaction with an appropriate peroxide or the like, drawing the crosslinked film or sheet at about 80 to about 200°C and cooling the film or sheet in the drawn state.

The adhesive layer used in the present invention is an adhesive layer composed mainly of an elastomeric material and has a bonding force expressed by a shear strength (as determined according to ASTM D-1002) of about 0.001 to about 0.05 $kg/cm^2$, preferably about 0.005 to 0.04 $kg/cm^2$, at a high temperature where the heat-shrinkable covering material (or the heat-shrinkable crosslinked plastic layer) exhibits a largest heat-shrinking force (for example, a high temperature in the range of from about 80 to about 200°C).

As pointed out above, the adhesive layer retains a bonding force (shear strength) at a high temperature, and it is preferred that the shear strength at a normal temperature (about 20°C) be about 0.8 to about 30 $kg/cm^2$, more preferably about 1.0 to about 30 $kg/cm^2$.

It is preferred that the adhesive layer should contain about 25 to about 75% by weight, more preferably about 30 to about 70% by weight, of an elastomer component, for example, an olefin elastomer such as a polyisobutene rubber (IIR; butyl rubber), an ethylene-propylene copolymer rubber (EPR) or an ethylene-propylene-non-conjugated diene copolymer rubber (EPDM), a conjugated diene type elastomer such as a polybutadiene rubber, a polyisoprene rubber, a styrene-butadiene copolymer rubber, an acrylonitrile-butadiene copolymer rubber or a chloroprene rubber, or other non-conjugated diene type elastomer such as a chlorosulfonated polyethylene rubber, an acrylic rubber, an epichlorohydrin rubber, a chlorinated polyethylene rubber or a fluorinated polyethylene rubber.

An olefin elastomer as mentioned above or a mixture of an olefin elastomer with other non-conjugated diene elastomer and/or a conjugated diene elastomer is especially preferred as the elastomer component of the adhesive layer.

The adhesive layer may comprise other modifying polymer (modifier) customarily used for adhesives, a tackifier, an anti-corrosive agent and an inorganic filler in addition to the above-mentioned elastomer component. As the modifying polymer, there can be mentioned thermoplastic or liquid resins, which include, for example, olefin polymers such as polyethylene, an ethylene-vinyl acetate copolymer, an ethylene-propylene copolymer, an acrylate-ethylene copolymer, polypropylene and polybutene, and polyvinyl chloride, a polyamide and styrene polymers. As the tackifier, there can be mentioned, for example, rosin, a rosin derivative, a pinene resin, an aliphatic hydrocarbon resin (homopolymer or copolymer of $C_5$ fraction, pentene, isoprene or 1,3-pentadiene), an aromatic hydrocarbon resin (homopolymer or copolymer of $C_9$ fraction, a styrene compound or an indene compound), an alicyclic hydrocarbon resin, a coumarone resin, a coumarone-indene resin, a phenolic resin, a naphthenic oil and modified terpene. As the anti-corrosive agent, there can be mentioned, for example, inorganic anti-corrosive agents such as a metal chromate, a metal phosphate, a metal phosphite, a metal borate, a metal molybdate and a metal nitrite, and organic anti-corrosive agents such as a metal salt of an aromatic carboxylic acid, an aliphatic or aromatic compound containing at least two hydroxyl groups and tannic acid. As the inorganic filler, there can be mentioned talc, calcium carbonate, silica, alumina, mica and carbon black.

In the present invention, an adhesive layer composed of a heat-bondable adhesive composition comprising about 30 to about 65% by weight of an olefin elastomer as described above, about 1 to about 20% by weight of a modifying polymer, about 10 to about 30% by weight of a tackifier and 0 to about 20% by weight of an inorganic filler is most preferred, because the bonding force (shear strength) at a normal temperature is at least about 1.0 $kg/cm^2$, the bonding force (shear strength) at high temperatures is at least about 0.005 $kg/cm^2$ at 80°C and at least about 0.01 $kg/cm^2$ at 100°C and the bonding force is not abruptly decreased at higher temperatures.

In the covering material of the present invention, if the content of the elastomer component in the adhesive layer is too low, the shear strength is drastically reduced at a heat-shrinking temperature higher than about 80°C as in case of an ordinary hot-melt adhesive. If the content of the elastomer component is too high, the bonding force after cooling to a normal temperature is low. Therefore, too high an elastomer component content and too low an elastomer component content are not preferred.

The tackifier is incorporated for imparting a flowability and a tackiness to the adhesive. If the content of the tackifier is too low, these properties are not obtained.

In the heat-shrinkable covering material of the present invention, the adhesive layer having a high shear strength at a high temperature may be formed on the entire surface of one side of the heat-shrinkable crosslinked plastic layer. If necessary, the above-mentioned adhesive layer having a high shear strength at a high temperature may be formed as a first adhesive layer on a part of the crosslinked plastic sheet (for example, the inner surface portion of the covering material contacted with the large-diameter side in case of a pipe where the outer diameter is gradually reduced, or the inner surface portion of the covering material contacted with a neck of a branch in case of a T-shaped pipe) while an ordinary hot-melt adhesive having a high bonding strength at a normal temperature is formed as a second adhesive layer on the portion contiguous to the first adhesive layer-applied portion.

For example, a hot-melt type adhesive comprising 30 to 80% by weight of a thermoplastic resin such as polyethylene, polypropylene, an ethylene-vinyl acetate copolymer, an acrylonitrile-ethylene copolymer, polyvinyl chloride, a polyester or a polyamide, 0 to 50% by weight of asphalt (bitumen), 10 to 20% by weight of a tackifier and 0 to 20% by weight of an inorganic filler is preferred as the second adhesive layer, because this adhesive is excellent in the bonding force at a normal temperature (shear strength of about 5 to about 30 $kg/cm^2$) and flows adaptively to small irregularities on the surface to be covered.

The same tackifier, inorganic filler and other additive as mentioned above may be used for the second adhesive layer.

It is preferred that the heat-shrinkable crosslinked plastic layer has a thickness of 0.1 to 3.0 mm, more preferably 0.2 to 2.5 mm, and the adhesive layer has a thickness of 0.05 to 2.5 mm, more preferably 0.1 to 2 mm.

Application of the heat-shrinkable covering material of the present invention can be carried out, for example, in the following manner. In the case where a heat-shrinkable covering material is applied onto a special shape pipe, as shown in Fig. 2, the heat-shrinkable covering material 1 is wrapped around a special shape pipe (reducer) 4 covered with coating layers 5 and 5' of a plastic resin, and both the ends of the covering material 1 are lapped and connected by a heat-seal tape 6 to form a cylinder. Then, as shown in Fig. 3, the cylindrical covering material 1 is heated by a flame of a gas burner to cause the covering material to adhere closely to the surface of the special shape pipe and then the covering material 1 is bonded to the surface of the pipe through an adhesive layer 3 of the covering material by heating. In this operation, the known covering material slips out from the coating layer 5' of a plastic resin on the larger outer diameter side of the special shape pipe at heat shrinking. On the other hand, the heat-shrinkable covering material of the present invention has an adhesive layer having a high shear strength at a high temperature adopted at heat shrinking. Therefore, the heat-shrinkable covering material does not slip off from the coating layer 5 of the plastic resin on the large diameter side of the special shape pipe, and both the ends of the covering material are not separated from each other.

The heat-shrinkable coating material of the present invention is not particularly limited to a rectangular sheet as shown in Fig. 1, but it is sufficient if the covering material has a shape adapted for the special configuration of the surface of a special pipe to be covered. For example, the covering material may have a trapezoid shape, a sector shape or other shape.

In the case where the heat-shrinkable covering material is applied onto a part of the surface (such as plane surface, bent surface, curved surface, wavy surface or corner surface of a mirror plate of a tank, a blind flange or a neck of a T-shaped pipe), the surface layer of a metal material to be covered is heated at a temperature of about 80 to about 200°C, and the adhesive layer side of the heat-shrinkable covering material is applied to the heated surface of the metal material in sequence from one side of the sheet. Thus, the heat-shrinkable covering material is placed in the heated state on a part of the surface of the material to be covered, followed by bonding and then cooling to a normal temperature.

- 11 -                                    0134491

The plane configuration of this heat-shrinkable covering material is not particularly critical, and the covering material may have a band-like, rectangular, trapezoid, sector, circular or ellipsoidal shape.

The present invention will now be described in detail with reference to the following examples and comparative examples.

In the examples and comparative examples, the shear strength was determined according to the method of ASTM D-1002 by lapping two iron sheets (125 mm x 25 mm x 1.5 mm) along 12 mm, applying an adhesive between the two sheets in the lapped portion, heating the assembly at 130°C for about 5 minutes to bond the iron sheets and simultaneously pulling the iron sheets at both the ends by a universal tensile tester.

Example 1

An adhesive comprising 30% by weight of a butyl rubber, 25% by weight of an ethylene-propylene-non-conjugated diene copolymer rubber, 5% by weight of polybutene, 20% by weight of a coumarone-indene resin and 10% by weight of talc was kneaded at a temperature of 150°C for 5 minutes and shaped into a sheet having a thickness of 1.5 mm by a roll.

The shear strength of the adhesive sheet as measured according to the above-mentioned method was 0.029 $kg/cm^2$ at 80°C and 0.014 $kg/cm^2$ at 105 to 110°C and the shear strength was not abruptly reduced at 110 to 120°C. The shear strength was 1.15 $kg/cm^2$ at 20°C.

The adhesive sheet was bonded to the entire surface of one side of a crosslinked plastic sheet (having a thickness of 1.0 mm, a gel fraction of 60%, a thermal shrinkage ratio of 45% in the longitudinal direction and a heat-shrinking temperature of 105°C) to form a heat-shrinkable covering sheet having a thickness of 2.5 mm, a width of 1000 mm and a length of 2800 mm.

As shown in Fig. 2, this heat-shrinkable covering sheet was wrapped around a reducer type special shape pipe (the outer diameter of the large-diameter portion was 32 inches, the outer diameter of the small-diameter portion was 24 inches and the length was 610 mm), and both the ends were bonded and covered by a heat-seal tape to form a cylinder. The cylindrical covering material was heated at about 105 to about 110°C by a flame of a gas burner to effect heat shrinking and cause the covering material to adhere closely to the periphery of the special shape pipe. Heating was further conducted to bond the covering material to the periphery of the special shape pipe.

In the above covering operation, the covering material did not slip off even on the large-diameter side of the special shape pipe, and both the ends of the covering material were not separated from each other, and thus a good covering layer was formed on the pipe.

Comparative Example 1

An adhesive sheet was prepared in the same manner as described in Example 1 except that a composition comprising 20% by weight of an ethylene-propylene-non-conjugated diene copolymer, 25% by weight of an ethylene-acrylate copolymer, 45% by weight of a coumarone-indene resin and 10% by weight of a microcrystalline wax was used as the adhesive.

The shear strength was 0.124 $kg/cm^2$ at 80°C and 0.001 $kg/cm^2$ at 105 to 110°C and the shear strength was drastically reduced at a temperature higher than 110°C. The shear strength was 24.2 $kg/cm^2$ at 20°C.

A heat-shrinkable covering sheet was prepared in the same manner as described in Example 1 by using this adhesive sheet, and the periphery of a reducer type special shape pipe was covered with the covering material in the same manner as described in Example 1.

In this covering operation, when the cylindrical heat-shrinkable covering sheet was heated at a temperature of at least 90°C, abnormal deviation of the covering sheet was caused in the large-diameter portion of the special shape pipe and a large area of the surface of the pipe was exposed.

Example 2

A heat-shrinkable covering sheet was prepared in the same manner as described in Example 1 except that a band-like first adhesive layer having a width of about 150 mm, which was composed of the same adhesive as described in Example 1, was formed in parallel to one end edge in the longitudinal direction of the heat-shrinkable covering sheet and a second adhesive layer composed of the same adhesive as described in Comparative Example 1 was formed on the remaining surface (band-like surface having a width of about 850 mm) of the covering sheet.

This heat-shrinkable covering sheet was covered on the periphery of a reducer type special shape pipe in the same manner as described in Example 1 except that the first adhesive layer was lapped on the coating layer of the large-diameter portion of the special shape pipe.

In this covering operation, large slip of the covering material was not caused even on the large-diameter side of the special shape pipe, and a high bonding force at a normal temperature was attained in the portion where the diameter varied and thus a good covering layer was formed.

Example 3

The same adhesive sheet as that prepared in Example 1 was bonded to the entire surface of one side of a crosslinked plastic sheet having a thickness of 1.0 mm, a gel fraction of 60%, a thermal shrinkage ratio of 20% in the longitudinal direction and a heat-shrinking temperature of 105°C to form a heat-shrinkable covering materil in the form of rectangular sheet having a thickness of 2.5 mm, a width of 200 mm and a length of 600 mm.

A plurality of the so-prepared heat-shrinkage covering materials were cut so as to conform to the surface portion of a mirror plate portion of a cylindrical tank having an outer diameter of 600 mm, a length
of 1000 mm and a mirror plate curvature radius of 1000 mm.
The surface layer of the mirror plate portion of the
tank was heated at about 105 to 110°C, and the adhesive
layer sides of cut pieces of the heat-shrinkable covering
materials were contacted in succession to the heated
surface of the mirror plate portion and lapped and then
bonded to the surface of the mirror plate portion.
Finally, the assembly was naturally cooled.

In the covering operation, formation of wrinkles or
voids or peeling was not caused, and thus a good covering
layer was formed.

Comparative Example 2

A covering sheet was prepared in the same manner as
described in Example 3 except that a crosslinked plastic
sheet having a thermal shrinkage ratio of substantially
zero was used, and a mirror plate portion of a tank was
covered with this covering sheet in the same manner as
described in Example 3.

In the covering operation, when the covering sheet
was contacted with the surface of the mirror plate
portion heated at about 105 to about 110°C, many wrinkles
were formed on the covering sheet, whereby many voids
were formed between the adhesive layer and the surface
of the mirror plate portion.

0134491

## CLAIMS

1. A heat-shrinkable covering material for special shape pipes and other articles, which comprises a laminate of a heat-shrinkable crosslinked plastic layer and a heat-bondable adhesive layer, wherein the adhesive layer on all or a part of one surface of the crosslinked plastic layer is composed mainly of an elastomeric material and has a bonding force expressed by a shear strength of about 0.001 to about 0.05 $kg/cm^2$ (as determined according to ASTM D-1002) at a high temperature where the covering material exhibits a largest heat-shrinking force.

2. A heat-shrinkable covering material according to claim 1, wherein the crosslinked plastic layer has a heat-shrinking temperature of about 80°C to about 200°C.

3. A heat-shrinkable covering material according to claim 1, wherein the crosslinked plastic layer has a thermal shrinkage ratio of about 3% to 80%.

4. A heat-shrinkable covering material according to claim 1, wherein the crosslinked plastic layer has a thermal shrinkage ratio of about 20% to about 80%.

5. A heat-shrinkable covering material according to claim 1, wherein the crosslinked plastic layer has a thermal shrinkage ratio of about 3% to about 30% and such a thermal shrinkability that at the time of heating for application, thermal expansion owing to the linear thermal expansion coefficient is substantially cancelled.

6. A heat-shrinkable covering material according to claim 5, wherein the thermal shrinkage ratio is 1.5 to 7 times the linear expansion ratio.

7. A heat-shrinkable covering material according to claim 1, wherein the crosslinked plastic layer has a crosslinking degree such that the gel fraction is about 20 to about 90%.

8. A heat-shrinkable covering material according to claim 1, wherein the shear strength of the adhesive layer is about 0.005 to about 0.04 $kg/cm^2$ at a high

temperature where the covering material exhibits a largest heat-shrinking force.

9. A heat-shrinkable covering material according to claim 1, wherein the adhesive layer has a shear strength of about 0.8 to about 30 $kg/cm^2$ at a temperature of about 20°C.

10. A heat-shrinkable covering material according to claim 1, wherein the elastomeric material as the main component of the adhesive layer is an olefin elastomer or a mixture of an olefin elastomer with at least one elastomer selected from the group consisting of other non-conjugated diene elastomers and conjugated diene elastomers.

11. A heat-shrinkable covering material according to claim 1, wherein the adhesive layer contains about 25% to about 75% by weight of the elastomeric material.

12. A heat-shrinkable covering material according to claim 1, wherein the adhesive layer comprises about 30% to about 65% by weight of an olefin elastomer, about 1% to about 20% by weight of a modifying polymer, about 10% to about 30% by weight of a tackifier and 0% to about 20% by weight of an inorganic filler.

Fig. 1A    Fig. 1B

Fig. 2

Fig. 3

# EUROPEAN SEARCH REPORT

. Application number

EP 84 10 8154

| | DOCUMENTS CONSIDERED TO BE RELEVANT | | |
|---|---|---|---|
| **European Patent Office** | | | |

| Category | Citation of document with indication. where appropriate, of relevant passages | Relevant to claim | CLASSIFICATION OF THE APPLICATION (Int Cl 4) |
|---|---|---|---|
| X | EP-A-0 083 218 (RAYCHEM)<br>* Abstract; page 6, lines 1-19; page 7, lines 10-17; page 9, line 19 *<br>--- | 1,11 | B 29 C 61/06<br>C 09 J 7/02 |
| X | EP-A-0 049 609 (UBE)<br><br>* Abstract; page 12, claims 1,8; page 13, claims 8-10 *<br>--- | 1,10, 11 | |
| A | US-A-4 127 545 (JOHN E. CALLAN)<br>* Abstract; column 2, example 1 *<br>----- | 12 | |
| | | | **TECHNICAL FIELDS SEARCHED (Int. Cl.4)**<br><br>B 29 C<br>C 09 J |

The present search report has been drawn up for all claims

| Place of search<br>THE HAGUE | Date of completion of the search<br>24-10-1984 | Examiner<br>GIRARD Y.A. |
|---|---|---|